# EUROPEAN PATENT APPLICATION

(11) **EP 4 478 465 A2**
(43) Date of publication of application: **18.12.2024**
(21) Application number: 24181123.1
(22) Date of filing: 10.06.2024
(51) Int. Cl.: H01M 8/2465, H01M 8/10

(54) **INSULATING DATUM INSERT**

(30) Priority: 15.06.2023 US 202318335516
(71) Applicant: Plug Power, Inc., Latham, NY 12110 (US)
(72) Inventor: STEPANIAN, Benjamin, Latham, New York, 12110 (US)
(74) Representative: Buzzi, Notaro & Antonielli d'Oulx S.p.A.

(57) **Abstract**

A fuel cell plate includes a first surface, a second surface opposite the first surface, a peripheral edge, an alignment hole spaced from the peripheral edge, and an insert received therein. The insert includes an annular portion which bounds a passage for receiving an aligning member and flanges extending radially from axial ends of the annular potion on the first surface and second surface of the fuel cell plate. The insert is electrically insulating and may include an annular cantilever portion of an annular cantilever snap joint permitting insertion of the annular body into the alignment hole and forming a snap fit therein and inhibiting and/or preventing removal therefrom.

## Description

### TECHNICAL FIELD

The present invention relates, generally, to methods and systems for supporting a fuel cell stack, and more particularly, to systems and methods for supporting a fuel cell stack to minimize damage due to shocks, vibration, and short circuiting of a fuel cell stack system.

### BACKGROUND OF THE INVENTION

Fuel cells electrochemically convert fuels and oxidants to electricity and heat and can be categorized according to the type of electrolyte (e.g., solid oxide, molten carbonate, alkaline, phosphoric acid, or solid polymer) used to accommodate ion transfer during operation. Moreover, fuel cell assemblies can be employed in many (e.g., automotive to aerospace to industrial to residential) environments, for multiple applications.

A Proton Exchange Membrane (hereinafter "PEM") fuel cell converts the chemical energy of fuels such as hydrogen and oxidants such as air directly into electrical energy. The PEM is a sold polymer electrolyte that permits the passage of protons (i.e., H+ ions) from the "anode" side of the fuel cell to the "cathode" side of the fuel cell while preventing passage therethrough of reactant fluids (e.g., hydrogen and air gases). The Membrane Electrode Assembly (hereinafter "MEA") is placed between two electrically conductive plates, each of which has a flow passage to direct the fuel to the anode side and oxidant to the cathode side of the PEM.

Two or more fuel cells can be connected together to increase the overall power output of the assembly. Generally, the cells are connected in series, wherein one side of a plate serves as an anode plate for one cell and the other side of the plate is the cathode plate for the adjacent cell. These are commonly referred to as bipolar plates (hereinafter "BPP"). Alternately, the anode plate of one cell is electrically connected to the separate cathode plate of an adjacent cell. Commonly these two plates are connected back-to-back and are often bonded together (e.g., bonded by adhesive, weld, or polymer). This bonded pair becomes as one, also commonly called a bipolar plate, since anode and cathode plates represent the positive and negative poles, electrically. Such a series of connected multiple fuel cells is referred to as a fuel cell stack. The stack typically includes means for directing the fuel and the oxidant to the anode and cathode flow field channels, respectively. The stack usually includes a means for directing a coolant fluid to interior channels within the stack to absorb heat generated by the exothermic reaction of hydrogen and oxygen within the fuel cells. The stack generally includes means for exhausting the excess fuel and oxidant gases, as well as product water.

The stack also includes an endplate, insulators, membrane electrode assemblies, gaskets, separator plates, electrical connectors, and collector plates, among other components, that are integrated together to form the working stack designed to produce electricity. The different plates may be abutted against each other and connected to each other to facilitate the performance of particular functions.

A fuel cell plate may be utilized in a fuel cell stack to provide power in a variety of circumstances, such as in vehicles (e.g., commercial vehicles such as forklifts and passenger vehicles such as automobiles), buildings (e.g., as backup power for industrial, commercial, and residential structures), and in power storage (e.g., as long-term energy storage for a power grid). In each circumstance, and during manufacturing of the fuel cell plate, the fuel cell plate may be subject to physical forces (e.g., vibrations, blunt forces, and/or compressive forces) or electrical current/impulse which could damage the fuel cell plate and/or the fuel cell stack. Seismic activity could further cause such physical forces.

A fuel cell plate may be received in various locations during manufacturing of the fuel cell plate or during assembly into a fuel cell stack, often requiring an alignment member being inserted therethrough to hold the fuel cell in place relative to the needs of a manufacturing process or relative to other fuel cell plates in a fuel cell stack. In each instance where an aligning member may be used to hold a fuel cell plate still, a risk is present that contact of an aligning member with the fuel cell plate could cause physical deformation or short circuiting of the fuel cell plate, or other problems with a functioning of the fuel cell stack. This risk is present at least when the aligning member is inserted during manufacturing, when the aligning member is inserted during assembly of the fuel cell stack, and when the aligning member is present during operation of the fuel cell system.

Thus, there is a need for improved fuel cell systems and improved methods of manufacturing fuel cell plates to minimize damage to fuel cell components and minimize disruptions to operation of a fuel cell system caused by physical and electrical forces which may be applied thereto.

### SUMMARY OF THE INVENTION

The present invention provides, in a first aspect, a fuel cell plate which includes a first surface, a second surface opposite the first surface, a peripheral edge, an alignment hole spaced from the peripheral edge, and an insert received therein. The insert includes an annular portion which bounds a passage for receiving an aligning member and flanges extending radially from axial ends of the annular portion on the first surface and the second surface of the fuel cell plate.

The present invention provides, in a second aspect, an insert which includes an annular body formed of an electrically insulating material. The annular body includes a radially exterior surface, a radially interior surface bounding a passage for receiving an aligning member, axial ends, and flanges located at the axial ends which bound a cavity for receiving a fuel cell plate. The flanges include a first flange and a second flange, the first flange including a beveled edge and a stopping edge extending radially from the radially exterior surface to form a catch. The catch and the annular body form an elastically deformable cantilever portion of an annular cantilever snap joint permitting insertion of the annular body into an alignment hole of the fuel cell plate.

The present invention provides, in a third aspect, a method for use in assembling a fuel cell stack including inserting an insert into an alignment hole of a first fuel cell plate such that flanges of the insert extend radially from a body of the insert along opposite outside surfaces of a fuel cell plate. The alignment hole is spaced away from a periphery of the firs fuel cell plate and extends therethrough, and the insert is electrically insulating and bounds a first passage for receiving an aligning member therein.

### BRIEF DESCRIPTION OF THE DRAWINGS

The subject matter which is regarded as the invention is particularly pointed out and distinctly claimed in the claims at the conclusion of the specification. The foregoing and other features and advantages of the invention will be readily understood from the following detailed description of the preferred embodiments taken in conjunction with the accompanying drawings in which:
FIG. 1 is a block diagram of a fuel cell system in accordance with the invention;
FIG. 2 is a perspective view of a portion of a fuel cell plate of the fuel cell system of FIG. 1;
FIG. 3 is an exploded perspective view of a fuel cell plate of the fuel cell system of FIG. 1 being assembled with an insert;
FIG. 4A is a bottom-up perspective view of the insert of FIG. 3;
FIG. 4B is a top-down perspective view of the insert of FIG. 3;
FIG. 5A is a cross-sectional view of a portion of the fuel cell plate of FIG. 3 with an insert received in an alignment hole thereof;
FIG. 5B is a close-up view of a portion of the fuel cell plate of FIG. 5A;
FIG. 6 is a perspective view of a portion of the fuel cell plate of FIG. 3 with an insert received in an alignment hole thereof;
FIG. 7 is a perspective view of an aligning member received in a passage of the insert of FIG. 3;
FIG. 8 is a perspective view of the system of FIG. 1 showing the aligning member of FIG. 7 received in multiple instances of the insert of FIG. 3; and
FIG. 9 is a close-up view of a portion of FIG. 8
FIG. 10 is a cross-sectional view of the fuel cell plate of FIG. 5A, and a membrane electrode assembly (MEA) received in a cavity of the insert of FIG. 3.

### DETAILED DESCRIPTION OF THE INVENTION

The present invention will be discussed hereinafter in detail in terms of various exemplary embodiments according to the present invention with reference to the accompanying drawings. In following the detailed description, numerous specific details are set forth in order to provide a thorough understanding of the present invention. It will be obvious, however, to those skilled in the art that the present invention may be practiced without these specific details. In other instances, well-known structures are not shown in detail in order to avoid unnecessary obscuring of the present invention.

Furthermore, there is no intention to be bound by any expressed or implied theory presented in the preceding technical field, background, brief summary, or the following detailed description. It is also understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

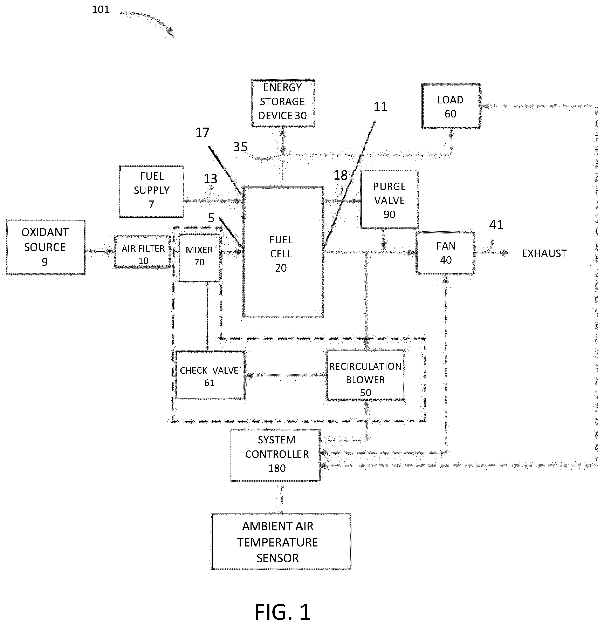

In accordance with the principals of the present invention, systems, and methods for supporting a fuel cell stack are provided. In the example depicted in FIG. 1, a fuel cell system 101 is referred to as the assembled, or complete, system which functionally together with all parts thereof produces electricity and typically includes a fuel cell stack 20 and an energy storage device 30. The fuel cell stack 20 is supplied with a fuel 13, for example, hydrogen, through a fuel inlet 17. Excess fuel 18 may be exhausted from the fuel cell stack 20 through a purge valve 90 and may be diluted by a fan 40. In one example, the fuel cell stack 20 may have an open cathode architecture of a PEM fuel cell, and combined oxidant and coolant, for example, air, may enter through an inlet air filter 10 couples to an inlet 5 of the fuel cell stack 20. Excess coolant/oxidant and heat may be exhausted from a fuel cell cathode of the fuel cell stack 20 through outlet 11 to the fan 40 which may exhaust the coolant/oxidant and/or excess fuel 18 to a waste exhaust 41, such as the ambient atmosphere. The fuel 13 and coolant/oxidant may be supplied by a fuel supply 7 and an oxidant source 9 (e.g., air), respectively, and other components of a balance of plant, which may include compressors, pumps, valves, fans, electrical connections, and sensors.

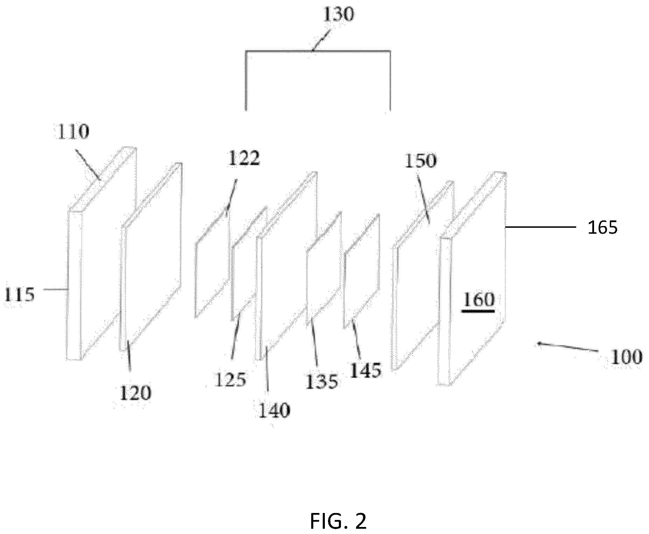

FIG. 2 depicts an internal subassembly 100 of the fuel cell stack 20 of FIG. 1 including a cathodic end fluid flow plate 110 at an outer end 115 and a flow plate seal 120 on an inner side thereof. A membrane electrode assembly (MEA) 130 is located between the flow plate seal 120 and a second flow plate seal 150. An anode flow plate 160 is on a second end 165 of subassembly 100.

The MEA 130 includes a membrane 140 between a cathode side catalyst layer 125 and an anode side catalyst layer 135. A cathode side gas diffusion layer (GDL) 122 is located between the cathode side catalyst layer 125 and the cathodic end fluid flow plate 110. An anode side gas diffusion layer 145 is located between the anode side catalyst layer 135 and the anode flow plate 160. The flow plate seal 120 and the second flow plate seal 150 may be received in a channel of an inner side of the cathodic end flow plate 110 and anode flow plate 160, respectively.

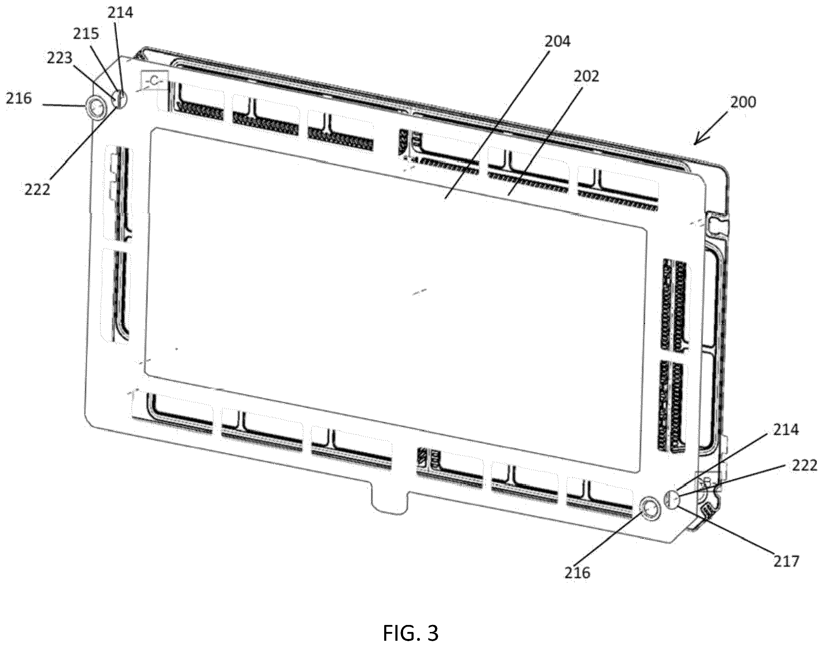

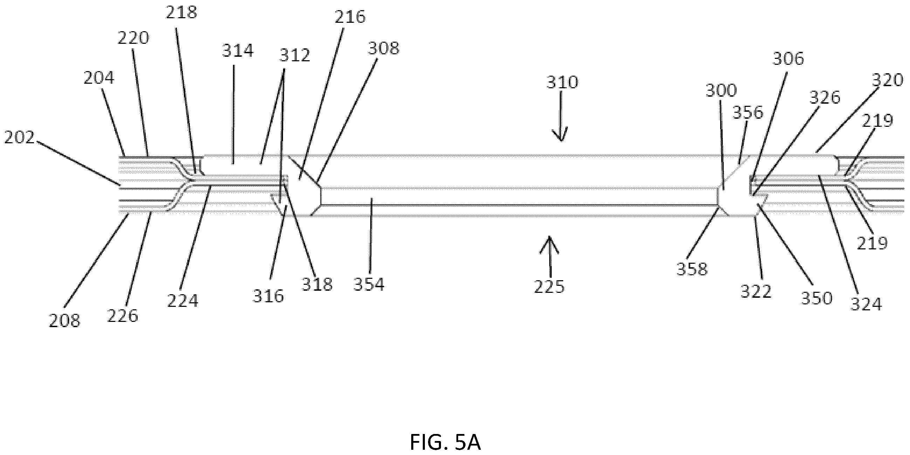

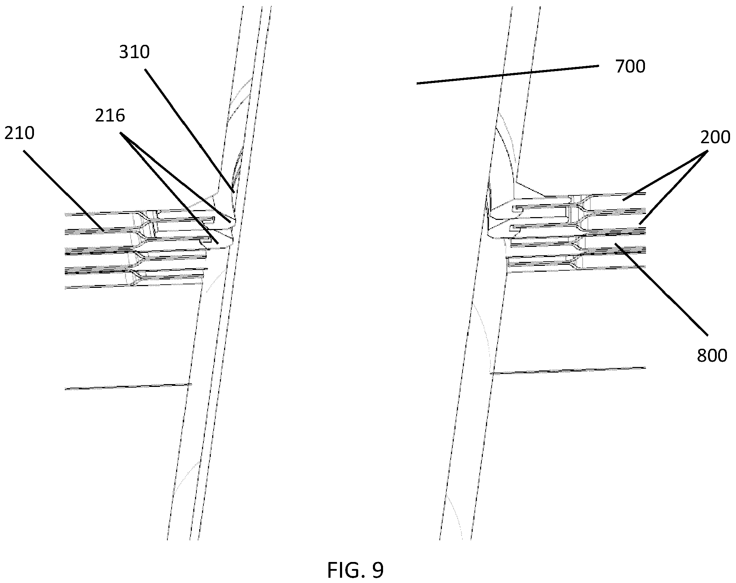

In an example, FIG. 3 depicts a bipolar fuel cell plate 200, which could be a cathode plate (e.g., the cathodic end fluid flow plate 110) or an anode fluid flow plate (e.g., the anode flow plate 160). Fuel cell plate 200 has a body 202 comprising a first surface 204, a second surface 208 (visible in FIG. 5A) opposite the first surface 204, and a peripheral edge 210 (visible in FIG. 9).

The body 202 may have one or a plurality of alignment holes 214 located at various locations on the first surface 204 and the second surface 208 of the body 202 (e.g., near each of four opposite corners thereof) which are spaced away from the peripheral edge 210. The alignment holes 214 may extend through the body 202 to be in fluid communication with both the first surface 204 and the second surface 208. Each of the alignment holes 214 may be configured (e.g., shaped and dimensioned) to receive an insert 216. In an example, a first alignment hole 215 of the plurality of alignment holes 214 is identical to a second alignment hole 217 of the plurality of alignment holes 214. In another example, the first alignment hole 215 and the second alignment hole 217 may be of different shapes and/or sizes.

A body (e.g., the body 202) of a fuel cell plate (e.g., the fuel cell plate 200) may include a plurality of alignment holes (e.g., the plurality of alignment holes 214) and a plurality of recessed portions 219 which may circumferentially surround one, some, or all openings 222 of the alignment holes 214 present on surfaces of the body (e.g., the first surface 204 and the second surface 208). In an example depicted in FIGS. 3 and 5A, a first recessed portion 218 of the plurality of recessed portions 219 located on the first surface 204 may be recessed relative to a first remaining portion 220 of the first surface 204 and may circumferentially surround and/or bound at least a first opening 223 of the first alignment hole 215. In further embodiments, a second recessed portion 224 of the plurality of recessed portions 219 located on the second surface 208 may also be recessed relative to a second remaining portion 226 of the second surface 208 and may similarly circumferentially surround at least a second opening 225 of the first alignment hole 215.

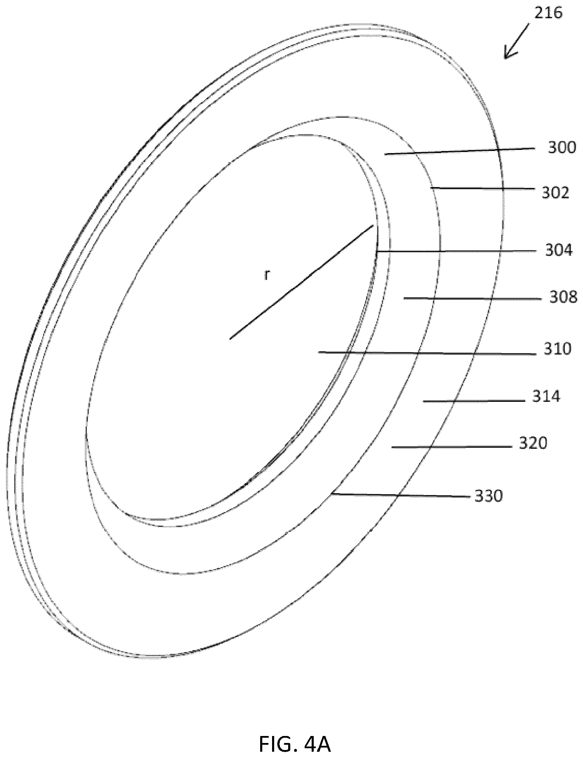

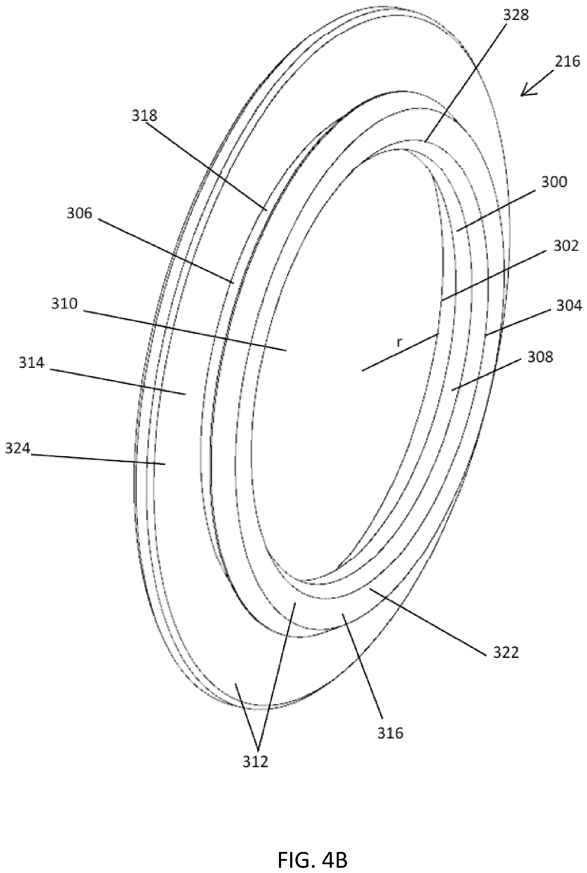

In some embodiments, the insert 216 may be monolithically formed as depicted in FIGS. 4A and 4B. In an example, the insert 216 is injection molded. The insert 216 may also be configured for use with modern fuel cell plate designs (e.g., the fuel cell plate 200). The insert 216 may include an annular body 300 having a first axial end 302 and a second axial end 304. The annular body 300 of the insert 216 may be substantially annular or cylindrical to permit insertion of the insert 216 into one of the alignment holes 214 (e.g., the first alignment hole 215 or the second alignment hole 217). In some embodiments, the insert 216 may be configured (e.g., shaped and dimensioned) in another shape where necessary to correspond with the shape of a reciprocal alignment hole (e.g., the second alignment hole 217).

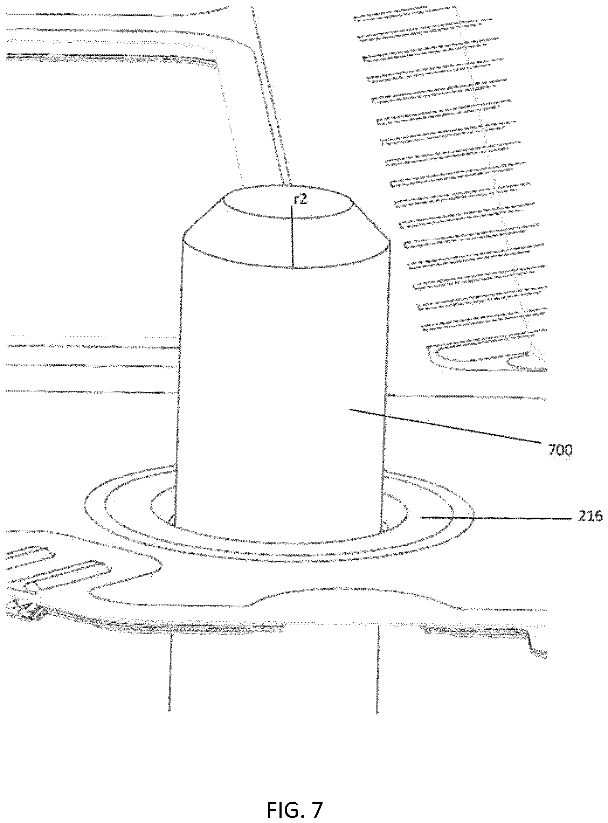

The annular body 300 may be tubular or hollow, including a radially exterior surface 306 and a radially interior surface 308. The radially interior surface 308 of the insert 216 may bound a passage 310 for receiving an aligning member 700 when the insert 216 is received in one of the alignment holes 214 (e.g., the first alignment hole 215) during assembly of the fuel cell stack 20 (partially depicted in FIG. 7). The passage 310 may also receive the aligning member 700 to hold the fuel cell plate 200 in place in various locations during various manufacturing processes.

The first axial end 302 and the second axial end 304 are located at opposite axial ends of the annular body 300 as depicted in FIGS. 4A and 4B. The first axial end 302 bounds a first opening 328 of the passage 310, and the second axial end 304 bounds a second opening 330 of the passage 310. In an example, the first opening 328 and the second opening 330 have the same radius r value. In another example, the first opening 328 may have a larger radius r than the second opening 330. While the radius r of the openings of the passage 310 may vary in different examples, at least one of the first opening 328 or the second opening 330 always has a radius r which is larger than a second radius r2 (FIG. 7) of the aligning member 700 to permit insertion of the aligning member 700 therein.

The aligning member 700 may be a bar or rod received in the passage 310 of the insert 216 by inserting the aligning member 700 into either the first opening 328 or second opening 330 of the passage 310. When fully inserted, the aligning member 700 may exit the opening opposite of that in which it was inserted, as partially depicted in FIGS. 7-9. The aligning member 700 may be configured (e.g. shaped and dimensioned) to be received in the passage 310 and may be formed of a material (e.g. steel, fiberglass) strong and rigid enough to (1) hold fuel cell plate 200 via insert 216 in a desired position during manufacturing, and/or (2) hold fuel cell plate 200 via insert 216 to a second fuel cell plate 800 (which may be different from or identical to the first fuel plate 200) during assembly of the fuel cell stack 20. The aligning member 700 may be inserted into the first opening 328 or second opening 330 from an exterior of the body 202 and may be movable within the passage 310 in an axial direction (e.g., towards or away from the first opening 328 or second opening 330). Multiple instances of the insert 216 received in one or more alignment holes (e.g., the alignment holes 214) of one or more fuel cell plates (e.g., the fuel cell plate 200 and/or the second fuel cell plate 800) may allow multiple instances of the aligning member 700 to move axially within multiple instances of the passage 310. In an example, multiple instances of the insert 216 are identical.

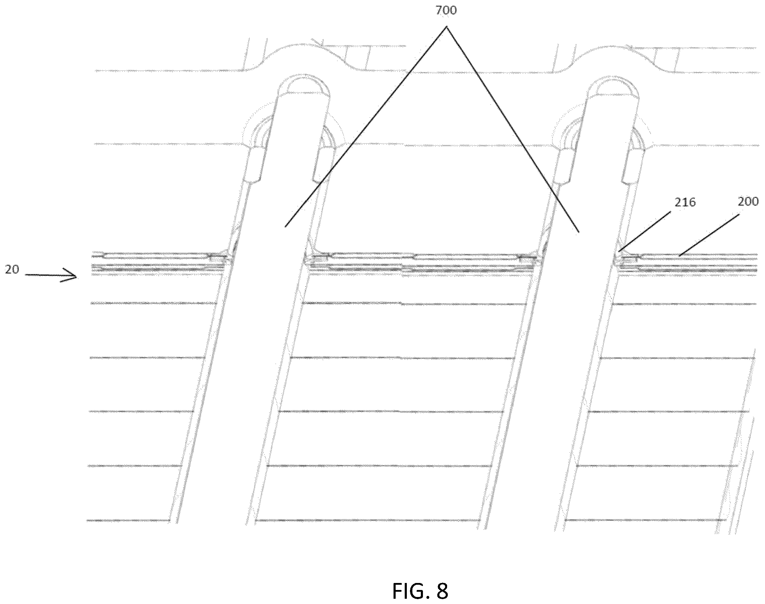

Further depicted in FIGS. 8-9, multiple instances of the aligning member 700 may be used to align and stack multiple instances of fuel cell plate 200 (or, similarly, to align and stack the fuel cell plate 200 and the second fuel cell plate 800) during assembly of the fuel cell stack 20. For example, multiple instances of aligning member 700 may be received in openings (e.g., multiple instances of the first opening 328 and/or the second opening 330) of multiple instances of the passage 310 of multiple instances of the insert 216. In this way, multiple instances of fuel cell plate 200 may be stacked to form a fuel cell stack 20 using multiple instances of aligning member 700. After such assembly into a fuel cell stack 20, the multiple instances of the aligning member 700 may be left in place to hold the multiple instances of the fuel cell plate 200 in position relative to each other in a stacking direction. In an example, such aligning member (e.g., the aligning member 700) may be removed and a different aligning member may be inserted into the passage 310 of the insert 216. Such different aligning member may have different rigidity or different conductivity relative to the removed aligning member. When stacked, the multiple instances of the fuel cell plate 200 may be aligned (e.g., vertically or in a stacking direction) along the peripheral edge 210 of the fuel cell plate 200 as depicted in FIG. 9.

Turning to FIGS. 4-6, the insert 216 may be formed of an electrically non-conductive material, for example, a plastic such as liquid crystal polymer E130i, such that a contact of insert 216 with aligning member 700 would not result in any electrical connection between the fuel cell plate 200 and the aligning member or any other fuel cell plate (e.g., multiple instances of the fuel cell plate 200 and/or the second fuel cell plate 800) which may be present in the fuel cell stack 20. The use of a non-conductive material insulates the body 202 from electricity which may pass through the aligning member 700 during assembly of the fuel cell stack 20 and operation of the fuel cell system 101. The material used to form the insert 216 may also protect from mechanical damage that may occur due to contact of the aligning member 700 with the fuel cell plate 200, such as during assembly of the fuel cell stack 20 and operation of the fuel cell system 101.

The material forming such inserts (e.g., the insert 216) may prevents or mitigate damage to the fuel cell plate 200, such as deformation of the body 202 and electrical shorting, which may otherwise result from interactions between the body 202 and the aligning member 700. For example, insert 216 may be an electrical insulator to inhibit an any such shorting. Further insert 216 may have sufficient structure and rigidity to inhibit any damage that may be caused to body 202 by contact aligning member 700 with insert 216 and thus any pressure through insert 212 to body 202 via such contact. Additionally, the insert 216 may be inserted into a previously bent or deformed alignment hole (not shown) to prevent further damage to a body of such a fuel cell plate with such deformation. Further, insert 216 may inhibit any electrical shorts that may otherwise result through the use of such a deformed alignment hole with an alignment rod (e.g., alignment rod 700) . The receiving of the insert 216 into an already deformed alignment hole may thereby extend the lifespan of fuel cell plates (e.g., the fuel cell plate 200) by slowing or preventing continued deformation which can lead to a hard failure (e.g., such that the corresponding plate or fuel cell stack portion is not functional).

Flanges 312 may extend from the first axial end 302 and the second axial end 304 of the annular body 300 as depicted in FIGS. 4A and 4B. Specifically, the flanges 312 may extend radially outwardly from the radially exterior surface 306 of the annular body 300. In some embodiments, the flanges 312 may be monolithically formed with the annular body 300. A first flange 314 of the flanges 312 may contact the first axial end 302 of the annular body 300 and extend radially therefrom. A second flange 316 of the flanges 312 may contact the second axial end 304 of the annular body 300 and may extend radially therefrom. The first flange may have a first outer side 320 and a first inner side 324, and the second flange 316 may have a second outer side 322 and a second inner side 326. In some embodiments, the first flange 314 and second flange 316 may extend the same distance in a radial direction. In further embodiments, the first flange 314 may extend further in a radial direction relative to the second flange 316. In an example, the first flange 314 and the second flange 316 may be of different shapes altogether.

In an example, the insert 216 may include a cavity 318 for receiving the body 202 of the fuel cell plate 200 when the insert 216 is present in the first alignment hole 215, as shown in FIG. 5A. The cavity 318 may be bounded by the first inner side 324 of the first flange 314, the second inner side 326 of the second flange 316, and the radially exterior surface 306 of the annular body, such that the body 202 of the fuel cell plate 200 is located between (e.g., sandwiched by) the flanges 312 when the body 202 is in the cavity 318. Cavity 318 may be configured (e.g., shaped and dimensioned) such that a "snap fit" connection (described further below) may exist which may inhibit a disconnection between the insert 216 and the fuel cell plate 200 when the body 202 is received in the cavity 318.

In some embodiments, the first inner side 324, the second inner side 326, and the radially exterior surface 306 may all be in contact with the body 202 when the body 202 is received in the cavity 318. However, in other embodiments, only the first inner side 324 and the second inner side 326 may be in contact with the body 202 when the body 202 is received in the cavity 318. In further embodiments, only one of the first inner side 324, the second inner side 326, or the radially exterior surface 306 may be in contact with the body 202 when the body 202 is received in the cavity 318. In even further embodiments, only the radially exterior surface and one of the first inner side 324 and second inner side 326 is in contact with the body 202 when the body 202 is received in the cavity 318.

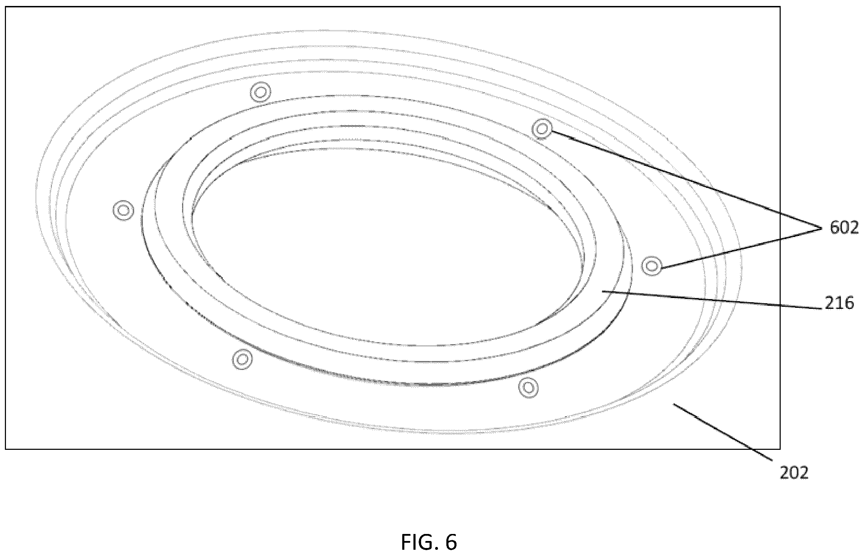

In some embodiments, the first inner side 324 and/or second inner side 326 may be configured (e.g., shaped and dimensioned) to inhibit removal of the body 202 from the cavity 318 once the body 202 has been received in the cavity 318, similarly inhibiting removal of the insert 216 from the first alignment hole 215. For example, the insert 216 may be configured to form a snap fit with the body 202 of the fuel cell plate 200, as explained in more detail below. In another example, at least one of the flanges 312 may be post-processed for a permanent fit against the fuel cell plate 200 to prevent removal of the body 202 from the cavity 318. Post-processing for a permanent fit may include the insert 216 being heat staked 602 to the body 202 on at least one of the flanges 312 as depicted in FIGS. 6, which shows the insert heat staked through the fuel cell plate 200 to secure one of the flanges 312 (not visible) on the opposite side.

Turning back to FIG. 5A, the flanges 312 may sandwich the body 202 of the fuel cell plate 200 therebetween. In doing so, the flanges 312 may also be configured (e.g., shaped and dimensioned) to engage with the first recessed portion 218 of the first surface 204 and/or the second recessed portion 224 of the second surface 208 of the body 202 of the fuel cell plate 200. In one embodiment, the first flange 314 may extend axially in the first recessed portion 218 such that the first outer side 320 of the first flange 314 is level (e.g., flush or aligned) with the first remaining portion 220 of the first surface 204. In another embodiment, the first flange 314 may extend axially in the first recessed portion 218 such that the first outer side 320 of the first flange 314 is below the level of the first remaining portion 220 of the first surface 204. The first flange 314 may extend radially along the first recessed portion 218 such that the first flange 314 contacts the first remaining portion 220 of the first surface 204.

In further embodiments, the second flange 316 may similarly extend axially in the second recessed portion 224 such that the second outer side 322 of the second flange 316 is level (e.g., flush or aligned) with the second remaining portion 226 of the second surface 208. The second flange 316 may also extend axially in the second recessed portion 224 such that the second outer side 322 of the second flange 316 is below the level of the second remaining portion 226 of the second surface 208.

A level transition between the first outer side 320 and the first remaining portion 220 and/or the second outer side 322 and the second remaining portion 226 allows for even distribution between the fuel cell plate 200 and the insert 216 of pressure, compression or other forces which may be applied to the fuel cell plate 200 during manufacturing and/or assembly of the fuel cell plate 200 into the fuel cell stack 20, and/or during operation of the fuel cell system 101, thus preventing and/or mitigating physical or mechanical damage and/or trauma thereto. Both where the transition between the first outer side 320 and the first remaining portion 220 and/or the second outer side 322 and the second remaining portion 226 is/are level, as well as where either/both of the flanges 312 extend axially to be below the level of the first remaining portion 220 and/or the second remaining portion 226, the presence of the insert 216 in the alignment hole (e.g., alignment hole 214) does not create additional or unwanted points of contact which may cause interference when compressive forces are applied during the process of stacking fuel cell plates (e.g., the fuel cell plate 200) during assembly of a fuel cell stack (e.g., the fuel cell stack 20). Further, an insert (e.g., insert 216) may have opposite outer sides (e.g., the first outer side 320, the second outer side 322) that avoid extending axially outwardly past adjacent remaining portions (e.g., the first remaining portion 220, the second remaining portion 226) such that the insert avoids contacting an adjacent fuel cell plate (e.g., an instance of plate 200) when a fuel cell stack (e.g., the fuel cell stack 20) formed of such plates is assembled. Such insert (e.g., insert 216) may thus avoid interfering with or contacting such plates when the plates are compressed or placed under load by securing members, such as bolts.

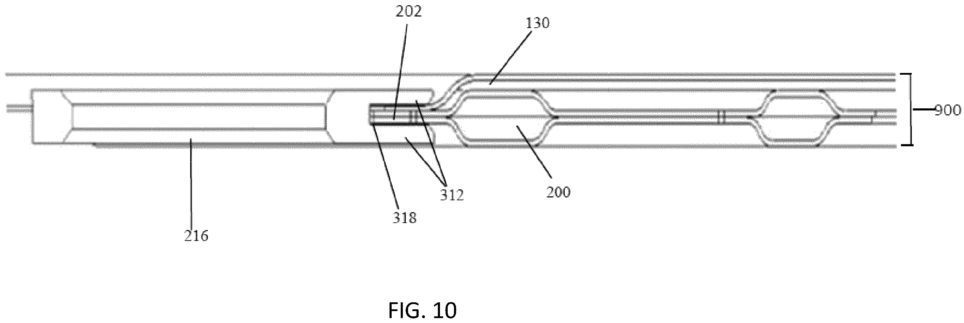

In an example partially depicted in FIG. 10, the cavity 318 of insert 216 may further be configured (e.g., shaped and dimensioned) to connect the MEA 130 to the fuel cell plate 200 to allow a manipulation of a subassembly 900 of the fuel cell plate 200 and the MEA 130 during assembly of the fuel cell stack 20. Such a connection may be performed mechanically, such as MEA 130 being received in the cavity 318 of the insert 216, along with the body 202 of the fuel cell plate 200, to make a unitized fuel cell plate. Use of the insert 216 to create a unitized fuel cell plate may be facilitated by a snap fit connection as described below. The ability to unitize a fuel cell plate may reduce manufacturing times. In contrast, non-constrained fuel cell assemblies in the prior art may not only take longer to manufacture, but may also make the MEA (e.g., the MEA 130) and fuel cell plate (e.g., the fuel cell plate 200) prone to damage caused by moving components.

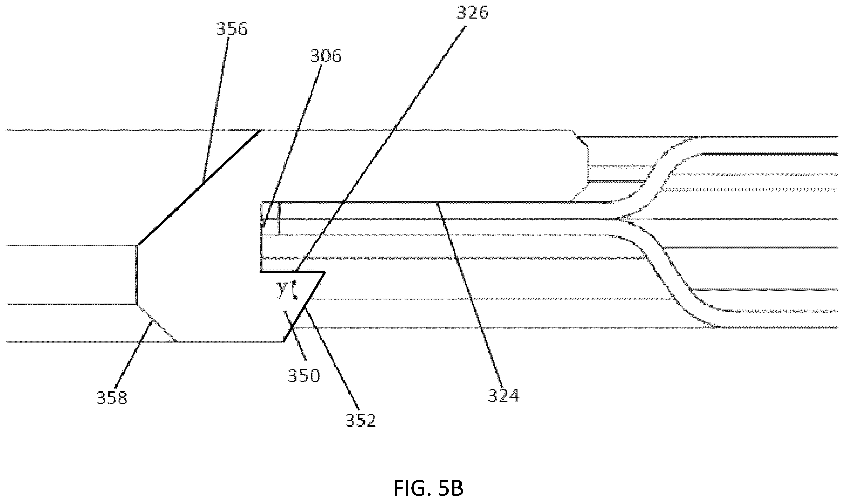

In some embodiments of the present invention, the second flange 316 may include a catch 350, as depicted in FIG. 5B, for example. The catch 350 may extend radially outwardly from the annular body 300 and includes a first beveled edge 352 and the second inner side 326 of the second flange 316. The first beveled edge 352 connects to the second inner side 326 at an angle y which may be any acute angle (e.g., a 45-degree angle).

The catch 350, together with the annular body 300, form an annular cantilever which, together with one of the alignment holes 214 (e.g., the first alignment hole 215) of the body 202 forms an annular cantilever snap joint permitting the insertion of the insert 216 into one of the alignment holes 214 (e.g., the first alignment hole 215) and forming a snap fit inhibiting removal of the insert 216 therefrom. For example, when a force is applied to the insert 216 during insertion into the first alignment hole 215, the first beveled edge 352 may be in contact with the first alignment hole 215 and may cause the force to be directed radially inwardly on the annular body 300 towards the passage 310. In response to the force, the annular body 300 may temporarily elastically deform (e.g., bend) radially inwards from a resting position into an elastically deformed position. The elastically deformed position may temporarily reduce the radius of the annular body 300 to allow at least the second flange 316 and the annular body 300 to fit through the first alignment hole 215. As the second flange 316 exits the first alignment hole 215 on a side opposite of that which it was inserted, the radially inward force may be released, and the annular body 300 may elastically reform (e.g., elastically return or snap back) from the elastically deformed position into the resting position (i.e., the originally non-deformed position).

As the annular body elastically reforms into its resting position, the second inner side 326 of the second flange 316 may slide over the body 202 of the fuel cell plate 200 and act as a stopper, inhibiting axial movement of the insert 216 in a direction opposite of the direction in which it was inserted into one of the alignment holes 214 (e.g., the first alignment hole 215). In this way, the insert 216 may form a snap fit connection with the body 202 of the fuel cell plate 200 when the insert 216 is inserted into one of the alignment holes 214 (e.g., the first alignment hole 215). In an example, when the insert 216 is present in the first alignment hole 215, the first inner side 324 of the first flange 314 may inhibit removal or further movement of the insert 216 in the direction in which it was inserted into the first alignment hole 215.

To facilitate the insertion of the insert 216 into any of the alignment holes 214 (e.g., the first alignment hole 215) as described above, the insert 216 may also be formed of an elastically deformable material, for example, a plastic such as liquid crystal polymer E130i. The use of an elastically deformable material may be necessary to permit the insert 216 to be inserted (via elastically deforming the insert 216) into one of the alignment holes 214 (e.g., the first alignment hole 215).

The material used to form the insert 216 may only need to be as elastically deformable as is necessary to permit the insert 216 to be inserted into one of the alignment holes 214 and may otherwise have rigid qualities. For example, in one embodiment of the present invention the insert 216 may be formed of a sufficiently rigid material to permit the snap fit to be maintained between the insert 216 and the body 202 of the fuel cell plate 200. In a further embodiment, the insert 216 is formed of a material rigid enough to allow for the insert 216 to provide protection to the body 202 of the fuel cell plate 200 from damage which may result from blunt forces, compressive forces, vibrations, or other physical trauma which may be incurred by the fuel cell plate 200 during manufacture or during assembly into the fuel cell stack 20. Blunt forces may be applied to the fuel cell plate 200, for example, when the aligning member 700 is inserted into the passage 310. Compressive forces may be applied to the fuel cell plate 200, for example, during stacking of the fuel cell plate 200 with other fuel cell plates (which may or may not be identical to the fuel cell plate 200) during assembly of the fuel cell stack 20.

To further mitigate against damage which may be caused to the fuel cell plate 200 when the aligning member 700 is inserted into one of the alignment holes 214 (e.g., the first alignment hole 215), the radially interior surface 308 of the annular body of the insert 216 may be configured (e.g., shaped and dimensioned) to guide the aligning member 700 through the passage 310. In an embodiment of the present invention, the radially interior surface 308 may comprise a flat annular middle portion 354, a second beveled edge 356, and a third beveled edge 358 as shown in FIG. 5A. In such an embodiment, the second beveled edge 356 and third beveled edge 358 may extend radially and outwardly on opposite sides of the flat annular middle portion 354, such that a radius (e.g., radius r) of the radially interior surface 308 is narrowest at the flat annular middle portion 354 and widens as it extends away from the flat annular middle portion 354. In other embodiments, there may only be a second beveled edge 356 extending radially and outwardly from the flat annular middle portion 354. Such an embodiment may be employed where, for example, it is known that the aligning member 700 will only be inserted and/or removed from a single direction, in which case the second beveled edge 356 may be sufficient to obtain the full benefit of the insert 216.

During insertion of an aligning member (e.g., the aligning member 700) into the passage 310, the aligning member 700 may contact either the second beveled edge 356 or the third beveled edge 358, and such contact with such edge may guide the aligning member 700 towards a center of the passage 310 and away from the body 202 of the fuel cell plate 200, thereby reducing the potential for the aligning member 700 to make contact with the body 202 of the fuel cell plate 200 and cause damage thereto. In this way, the radially interior surface 308 of the annular body 300 reduces the risk of damage which may result if the alignment member 700 were to contact the body 202 during manufacture of the fuel cell plate 200 or assembly of the fuel cell plate 200 into the fuel cell stack 20. The protection afforded to the fuel cell plate 200 by the presence of the insert 216 thereby addresses a problem in the prior art in which the nature of current designs make aligning members (e.g., the aligning member 700) prone to catching on fuel cell plates (e.g., the fuel cell plate 200) during manufacture and/or assembly into a fuel cell stack (e.g., the fuel cell stack 20), resulting in damage.

The insert 216 may be configured to enable tighter tolerances to aligning members (e.g., the aligning member 700) for better throughput in plate welding, gasketing, and stack assembly. In an example depicted in FIG. 7, when the aligning member 700 is present in the passage 310, the radially interior surface 308 may contact the aligning member 700, holding the aligning member 700 and the body 202 of the fuel cell plate 200 in position relative to each other. In this way, the insert 216 acts as a buffer between the fuel cell plate 200 and the aligning member 700 which reduces the range of movement of the aligning member 700 within the passage 310, mitigating the risk of damage which may be caused by such movement. In some embodiments, only the flat annular middle portion 354 of the radially interior surface 308 may abut the aligning member 700.

As described above, insert 216 may be formed of a plastic or other non-conductive or non-metallic material. As can be seen in FIG. 7, a connection of the insert 216 to the fuel cell plate 200 such that the body 202 of the fuel cell plate 200 is received in the cavity 318 of the insert 216 may allow contact of the aligning member 700 with the non-conductive material of the insert 216 during assembly of the fuel cell stack 20, and may similarly prevent contact between the aligning member 700 and the body 202 of the fuel cell plate 200. The non-conductive material may have properties such that a contact of such a non-conductive material with the aligning member 700 may have less of a frictional resistance therebetween than in a prior art situation where the fuel cell plate (e.g., the fuel cell plate 200) and the aligning member (e.g., the aligning member 700) are both formed of metal and are in direct contact with each other. Moreover, in some prior art situations, the plates may be thin metal plates subject to being deformed by contact with the aligning member. In contrast, in an embodiment of the present invention, a sliding of the insert 216 formed of non-conductive material or having a contacting portion formed of non-conductive material relative to the aligning member 700 may have less of a frictional resistance, and thus may be less likely to be damaged due to a catching or bending of the aligning member 700 relative to the insert 216, than in the case of where the contacting parts are made of metal.

While several aspects of the present invention have been described and depicted herein, alternative aspects may be affected by those skilled in the art to accomplish the same objectives. Accordingly, it is intended by the appended claims to cover all such alternative aspects as fall within the true spirit and scope of the invention.

## Claims

1. A fuel cell plate, comprising:
a body having a first surface, a second surface opposite said first surface, a peripheral edge, and an alignment hole spaced away from said peripheral edge and extending from said first surface to said second surface, and
an insulating insert comprising:
an annular portion received in said alignment hole and bounding a passage for receiving an alignment member, and
flanges at axial ends of said annular portion, said flanges extending radially from said annular portion,
such that said body is located between said flanges.

2. The fuel cell plate of claim 1, wherein said body comprises a bipolar fuel cell plate.

3. The fuel cell plate of claim 1, said insulating insert further comprising an elastically deformable material.

4. The fuel cell plate of claim 1, wherein said flanges comprise a first flange and a second flange, said first flange extending further in a radial direction than said second flange.

5. The fuel cell plate of claim 1, wherein said first surface comprises a first recessed portion and a first remaining portion, said first recessed portion being recessed relative to said first remaining portion and circumferentially bounding a first opening of said alignment hole.

6. The fuel cell plate of claim 5, wherein said flanges comprise a first flange and a second flange, said first flange extending axially in said first recessed portion to be level with said first remaining portion.

7. The fuel cell plate of claim 5, wherein said second surface comprises a second recessed portion and a second remaining portion, said second recessed portion being recessed relative to said second remaining portion and circumferentially bounding a second opening of said alignment hole.

8. The fuel cell plate of claim 7, wherein said flanges comprise a first flange and a second flange, said first flange extending axially in said first recessed portion to be level with said first remaining portion, and said second flange extending axially in said second recessed portion to be level with said second remaining portion.

9. The fuel cell plate of claim 5, wherein said flanges comprise a first flange and a second flange, said first flange extending radially along said recessed first recessed portion and contacting said first remaining portion.

10. The fuel cell plate of claim 1, wherein said flanges comprise a first flange and a second flange, said first flange having a catch which extends radially outwardly from said annular portion, said catch comprising:
a beveled edge and a stopping edge, wherein a cavity is bounded by said stopping edge, said annular portion, and said second flange for receiving said body,
said beveled edge configured to permit insertion of said body into said cavity in response to a force applied thereto, and
said stopping edge configured to inhibit removal of said body from said cavity.

11. The fuel cell plate of claim 10, wherein said stopping edge extends radially from said annular portion along a horizontal plane of said annular portion.

12. The fuel cell plate of claim 10, wherein said stopping edge contacts said body to inhibit removal of said body from said cavity.

13. The fuel cell plate of claim 10, wherein said stopping edge and said second flange contact said body.

14. The fuel cell plate of claim 1, further comprising a membrane electrode assembly located between said flanges.

15. The fuel cell plate of claim 1, said insulating insert further comprising of liquid crystal polymer E130i.

16. An insulating insert, comprising:
an annular body formed of an electrically insulating material and having a radially exterior surface and a radially interior surface, axial ends, and flanges located at said axial ends, said flanges extending radially outwardly from said exterior surface, said radially interior surface bounding a passage for receiving an aligning member, said flanges and said radially exterior surface bounding a cavity for receiving a fuel cell plate,
said flanges comprising a first flange and a second flange,
said first flange comprising a first beveled edge and a stopping edge extending radially from said radially exterior surface to form a catch, said catch and said annular body forming an elastically deformable cantilever portion of an annular cantilever snap joint, said cantilever portion being elastically deformable into an alignment hole of the fuel cell plate to allow for insertion of said annular body into said alignment hole.

17. The insulating insert of claim 16, wherein said radially interior surface comprises a flat annular middle portion and a second beveled edge extending axially away from said flat annular middle portion to facilitate insertion of an aligning member into said passage.

18. The insulating insert of claim 16, wherein said radially interior surface comprises a flat annular middle portion and a plurality of beveled edges extending axially on opposite sides of said flat annular middle portion to facilitate insertion of an aligning member through said passage].

19. A method for use in assembling a fuel cell stack comprising:
inserting an insert into an alignment hole of a first fuel cell plate such that flanges of said insert extend radially from a body of said insert along opposite outside surfaces of said fuel cell plate, wherein,
said alignment hole is spaced from a periphery of said first fuel cell plate and extends therethrough, and
said insert is electrically insulating and bounds a first passage for receiving an aligning member therein.

20. The method of claim 18, wherein said inserting the insert into said alignment hole comprises:
contacting a first outside surface of the outside surfaces with a beveled edge of said insert,
elastically deforming an insert portion of said insert radially inwardly towards said first passage such that said insert enters a first opening of said alignment hole and exits a second opening of said alignment hole, and such that said insert portion elastically reforms after exiting said second opening.

21. The method of claim 20, further comprising inhibiting removal of said insert from said alignment hole by a stopping portion of said insert portion, said stopping portion extending radially along a second outside surface of the outside surfaces.

22. The method of claim 21, wherein said inhibiting removal of said insert comprises said stopping portion sliding over and contacting a second surface of said fuel cell plate.

23. The method of claim 19, further comprising inserting an aligning member into said first passage.

24. The method of claim 23, wherein said inserting an aligning member into said first passage further comprises said aligning member passing through a second passage of a second insert in a second alignment hole of a second fuel cell plate, such that said first passage and said second passage are in alignment.

25. The method of claim 24, further comprising inserting a second aligning member through a third passage of a third insert in a third alignment hole in the first fuel cell plate and inserting said second aligning member through a fourth passage of a fourth insert in a fourth alignment hole in the second fuel cell plate, such that said third passage and said fourth passage are in alignment and such that said first fuel cell plate and said second fuel cell plate are aligned along said periphery of said first fuel cell plate.
